# EUROPEAN PATENT SPECIFICATION

(11) **EP 2 839 482 B1**
(45) Date of publication and mention of the grant of the patent: **27.09.2017**
(21) Application number: 13777652.2
(22) Date of filing: 16.04.2013
(51) Int. Cl.: G21C 15/25, G21C 7/12, G21C 13/02, G21C 1/32

(54) **INTEGRAL PRESSURIZED WATER REACTOR WITH COMPACT UPPER INTERNALS ASSEMBLY**
INTEGRIERTER DRUCKWASSERREAKTOR MIT KOMPAKTER OBEREINBAUANORDNUNG
RÉACTEUR À EAU SOUS PRESSION INTÉGRÉ COMPRENANT UN ENSEMBLE D'ÉLÉMENTS INTERNES SUPÉRIEURS COMPACTS

(30) Priority: 17.04.2012 US 201261625491 P
(43) Date of publication of application: 25.02.2015
(73) Proprietor: Babcock & Wilcox mPower, Inc., Charlotte, NC 28277 (US)
(72) Inventor: SHARGOTS, Scott, J, Forest, VA 24551 (US); ALES, Matthew, W., Forest, VA 24551 (US); BERTHOLD, Michael, S., Holly Springs, NC 27540 (US)
(74) Representative: D Young & Co LLP
(86) International application number: PCT/US2013/036756
(87) International publication number: WO 2013/158623

(56) References cited:
- WO-A1-2012/047438
- US-A- 4 072 563
- US-A- 4 678 623
- US-A- 4 975 239
- US-A- 5 930 321
- US-A1- 2002 176 529
- US-A1- 2008 279 326
- US-A1- 2010 316 181
- US-A1- 2012 076 254
- US-B1- 6 489 623

## Description

This application claims the benefit of U.S. Provisional Application No. 61/625,491 filed April 17, 2012.

### BACKGROUND

The following relates to the nuclear power arts, nuclear reaction control arts, and related arts.

Pressurized water reactor (PWR) designs have certain benefits over other light water reactor designs such as boiling water reactor (BWR) designs. For example, a PWR does not include complex steam separation hardware in the upper portion of the reactor vessel. In conventional PWR designs, this has allowed the control rod assemblies (CRAs) to penetrate the reactor through the top of the pressure vessel with the control rod drive mechanism (CRDM) units mounted externally above the pressure vessel. In this arrangement, a vessel penetration passing a connecting rod occurs at the top of the pressure vessel, whereas in a BWR design such penetrations are at the bottom of the pressure vessel, and in some design even below the reactor core itself.

In some planned small modular reactor (SMR) designs, it is contemplated to improve upon the conventional reactor design by locating the entirety of the CRDM units inside the pressure vessel. See Stambaugh et al., U.S. Pub. No. 2010/0316177 A1; Desantis, U.S. Pub. No. 2011/0222640 A1; Stambaugh et al., WO 2010/144563 A1; and Thome et al., U.S. Pub. No. 2010/0316181 A1. This arrangement eliminates mechanical vessel penetrations entirely, replacing them with electrical and/or hydraulic penetrations to drive the internal CRDM units. In some such SMR designs, it is further contemplated to employ a so-called "integral" PWR configuration in which the steam generators are also located inside the pressure vessel. See Thome et al., U.S. Pub. No. 2010/0316181 A1 .

An integral PWR with internal CRDM units places a substantial number of components inside the pressure vessel. The internal steam generators need to have sufficient height to controllably convert inlet feedwater to steam. The control rod system must also have substantial height: The motors of the CRDM units must be located at least the full length of the control rods above the reactor core to allow full rod retraction, and a similar clearance must be provided above the motors to accommodate the connecting rods when the control rods are fully retracted.

Thome et al., U.S. Pub. No. 2010/0316181 A1, leverages the conventional arrangement of a central riser surrounded by a downcomer annulus to achieve a compact integral PWR configuration including internal CRDM units. The steam generators are located in the downcomer annulus, while the CRDM units are located inside the central riser. This enables substantial vertical overlap between the steam generators and the CRDM units, providing a more compact SMR design.

WO 2012/047438 discloses an integral nuclear reactor with a mid-flange, a cylindrical central riser, and a reactor core located in the lower vessel section. The CRDM units are disposed above the reactor core with no vertical overlap between the upper vessel section and the units. A steam generator is disposed in the upper vessel.

In US 2008/279326 support plates of CRDM units are suspended by tie rods.

### BRIEF SUMMARY

In one aspect of the disclosure, an apparatus comprises: a cylindrical pressure vessel including an upper vessel section and a lower vessel section joined by a mid-flange; a cylindrical central riser disposed concentrically inside the cylindrical pressure vessel and including an upper riser section disposed in the upper vessel section and a lower riser section disposed in the lower vessel section; a reactor core comprising fissile material disposed inside the cylindrical pressure vessel in the lower vessel section; and control rod drive mechanism (CRDM) units controlling control rod insertion into the reactor core. The CRDM units are disposed inside the cylindrical pressure vessel above the reactor core and in the lower vessel section with no vertical overlap between the upper vessel section and the CRDM units.

In another aspect of the disclosure, an apparatus comprises: a cylindrical pressure vessel including an upper vessel section and a lower vessel section joined by a mid-flange; a cylindrical central riser disposed concentrically inside the cylindrical pressure vessel and including an upper riser section disposed in the upper vessel section and a lower riser section disposed in the lower vessel section; steam generators disposed inside the cylindrical pressure vessel in the upper vessel section; a reactor core comprising fissile material disposed inside the cylindrical pressure vessel in the lower vessel section; and control rod drive mechanism (CRDM) units disposed inside the cylindrical pressure vessel above the reactor core and in the lower vessel section. There is no vertical overlap between the steam generators and the CRDM units.

In another aspect of the disclosure, a method is disclosed, which is suitably performed in conjunction with the apparatus of either one of the two immediately preceding paragraphs. The method comprises disconnecting the upper vessel section from the mid-flange, and removing the upper vessel section without lifting the upper vessel section over any portion of the CRDM units. The method may further include disconnecting the mid-flange from the lower vessel section, and removing the mid-flange and the CRDM units from the lower vessel section with the CRDM units hanging suspended from the mid-flange.

### BRIEF DESCRIPTION OF THE DRAWINGS

The invention consists in an apparatus according to the subject-matter of claim 1 and in a method according to the subject-matter of claim 18. It may take form in various components and arrangements of components, and in various process operations and arrangements of process operations. The drawings are only for purposes of illustrating preferred embodiments and are not to be construed as limiting the invention.
FIGURE 1 diagrammatically shows a side sectional view of an integral pressurized water reactor (PWR) including a reactor core comprising fissile material disposed in a pressure vessel, with upper internals including internal control rod drive mechanism (CRDM) units and control rod guide frames mounted in suspended fashion from a mid-flange of the pressure vessel.
FIGURES 2 and 3 show perspective and side views, respectively, of the mid-flange and the suspended upper internals of the integral PWR of FIGURE 1.
FIGURE 4 shows a perspective view of the lower vessel section and mid-flange of the integral PWR of FIGURE 1 with the upper vessel section removed.
FIGURE 5 shows a perspective view of the mid-flange and suspended upper internals lifted out of the lower vessel section of the integral PWR of FIGURE 1.
FIGURES 6 and 7 show perspective and side views, respectively, of the mid-flange and the suspended upper internals of the integral PWR of FIGURE 1 for an alternative embodiment in which the reactor coolant pumps (RCPs) shown in FIGURE 1 are replaced by internal RCPs mounted at the mid-flange.

### DETAILED DESCRIPTION OF THE PREFERRED EMBODIMENTS

Disclosed herein are small modular reactor (SMR) designs employing an integral pressurized water reactor (integral PWR) configuration with internal control rod drive mechanism (CRDM) units. The approaches disclosed herein provide substantial operational benefits. The disclosed integral PWR designs do not include any vertical overlap between the steam generators or the upper vessel, on the one hand, and the CRDM units located in the lower vessel on the other hand. The disclosed designs establish a complete separation of components into: (1) an upper vessel section that includes the steam generators but not the CRDM units; and (2) a lower vessel section that includes the CRDM units but not the steam generators. The steam generators do not extend downward into the lower vessel, and conversely the CRDM units do not extend upward into the upper vessel.

This disclosed configuration has substantial benefits. During an opening of the reactor vessel for refueling, maintenance, inspection, or other purposes, the upper vessel section including the steam generators can be lifted off and moved laterally without raising it above an overlapping portion of the CRDM units. This allows the height of the containment structure to be reduced. Further, by placing the CRDM units entirely in the lower vessel, more of the total vessel height can be accommodated by the lower vessel as compared with the upper vessel. Said another way, for a given total pressure vessel height, the disclosed designs enable the lower vessel to be made relatively taller and the upper vessel relatively shorter. The reduced upper vessel height translates into reduced weight as well, which further facilitates upper vessel removal.

During refueling, the upper internals (including the internal CRDM units and control rod guide frames) must be removed to gain access to the reactor core located at or near the bottom of the lower vessel section. The disclosed configuration suspends the upper internals from a "mid-flange" which is located above the upper internals and at the juncture between the upper and lower vessel sections. With this configuration, and after removal of the upper vessel section, a crane or other robotic lifting apparatus can connect with the mid-flange and lift the upper internals out of the lower vessel as a single-piece unit suspended from the mid-flange in order to provide access to the reactor core from above. Because the upper internals are suspended from and hang below the mid-flange which is providing the anchor point for lifting out the upper internals, there is no tendency for the upper internals to tilt.

In some embodiments, all power and control lines for the CRDM units are brought in through the mid-flange. In this case, internal connections running from the mid-flange to the CRDMs can be left connected when the upper internals are lifted out of the lower vessel. Indeed, if a dedicated robotic assembly is available then the upper internals can be lifted out and moved to a storage/maintenance bay inside containment, and can be inspected and any indicated maintenance performed while the upper internals remain connected to the robotic assembly used in their removal.

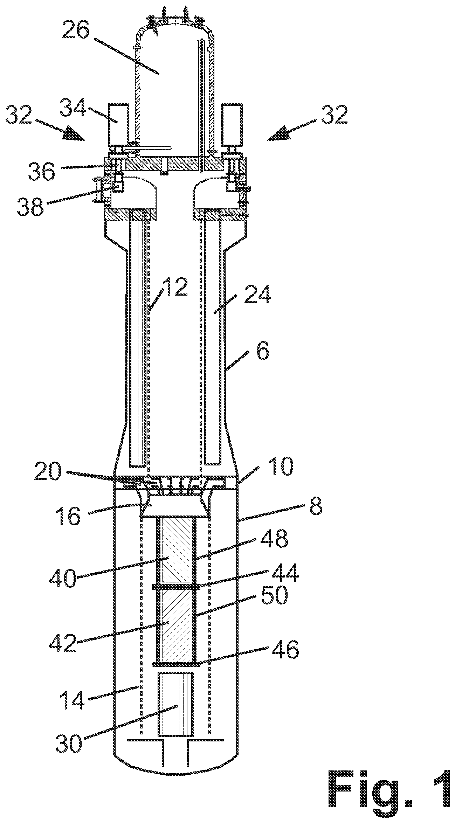

With reference to FIGURE 1, an illustrative integral PWR includes a cylindrical pressure vessel including an upper vessel section **6** and a lower vessel section **8** joined by a mid-flange **10.** A cylindrical central riser is disposed concentrically inside the cylindrical pressure vessel and includes an upper riser section **12** disposed in the upper vessel section **6,** a lower riser section **14** disposed in the lower vessel section 8, and a riser transition section **16** connecting the upper riser section **12** and the lower riser section **14.** To distinguish the components, the upper and lower riser sections **12, 14** are shown in dashed lines in FIGURE 1 while the riser transition section **16** is shown in solid lines in FIGURE 1. The riser transition section **16** is connected to the mid-flange **10,** in the illustrative embodiment by gussets **20** having first ends welded to the mid-flange **10** and second ends welded to the riser transition section **16.** In the illustrative embodiment, the gussets **20** are angled downward such that the riser transition section **16** is disposed below the mid-flange **10.**

As used herein, the modifier "cylindrical" is intended to denote a generally cylindrical element, and allows for some deviation from a mathematically perfect cylinder. For example, the illustrative pressure vessel of FIGURE 1 has a generally narrower upper vessel section **6** as compared with the lower vessel section **8,** with the upper vessel section **6** expanding near its connection with the mid-flange **10.** Similarly the illustrative upper riser section **12** is smaller-diameter than the lower riser section **14,** and the riser transition section **16** includes a frusto-conical portion to accommodate this diameter difference. Moreover, the cylindrical pressure vessel includes various vessel penetrations and other deviations from perfect cylinder.

As used herein, the term "vertical" and references to "above" and "below" assume that the pressure vessel is positioned "vertically" with the upper vessel section **6** above the lower vessel section **8.** Such phraseology is intended to encompass some tilt or deviation from a perfectly vertical orientation..

With continuing reference to FIGURE 1, the upper vessel section **6** contains steam generators **24** disposed inside the cylindrical pressure vessel. In the illustrative example, the steam generators **24** are entirely in the upper vessel section **6,** and do not extend into the mid-flange **10** or lower vessel section **8.** The steam generators **24** are not illustrated in detail, but can have various configurations, such as a helical configuration (*see* Thome et al., U.S. Pub. No. 2010/0316181 A1), a once-through straight-tube steam generator (OTSG) configuration optionally including a lower internal economizer portion, or so forth. The steam generators **24** are internal to the pressure vessel, and the PWR is referred to as an integral PWR. In the illustrative embodiment, the steam generators **24** are secured to the upper vessel section 6 such that the upper vessel section **6** and the steam generators **24** can be lifted as a unit (once the bolts or other fasteners securing the upper vessel section **6** to the mid-flange **10** are detached). Because the steam generators **24** are entirely in the upper vessel section **6,** and do not extend into the mid-flange **10** or lower vessel section **8,** the upper vessel/steam generators unit does not need to be raised to any particular height to lift the steam generators out of the lower vessel before moving the lifted assembly laterally.

The illustrative upper vessel section 6 also includes an uppermost portion 26 that defines an internal pressurizer and may include pressure control components such as spargers, resistive heaters, or so forth. Alternatively, an external pressurizer may be provided and operatively connected with the pressure vessel via suitable piping in order to control pressure inside the pressure vessel. It is to be understood that the pressure vessel of the integral PWR contains a reactor core **30** comprising fissile material such as ²³⁵U disposed inside the cylindrical pressure vessel in the lower vessel section **8,** and preferably at or near the bottom of the lower vessel section **8.** It is to be further understood that the pressure vessel of the integral PWR contains primary coolant water in a subcooled state that fills the interior volume of the pressure vessel, except for a steam bubble in the internal pressurizer volume **26** (this steam bubble is also primary coolant water, but in a steam state). The primary coolant water flows in a circuit including a "hot leg" that flows upward from the reactor core **30,** rises through the central riser, discharges from the upper end of the upper riser section **12;** the discharged primary coolant water then flows through a return "cold leg" through a downcomer annulus defined between the central riser and the inner cylindrical surface of the pressure vessel. In the illustrative integral PWR, the cold leg includes the steam generators **24,** and the primary coolant flows downward through steam generator tubes (i.e., flows "tube-side") or alternatively flows downward along the outsides of the tubes (i.e., flows "shell-side"). The primary coolant in the cold leg flows downward to the bottom of the central riser where it again reverses direction and re-enters the reactor core **30** to complete the primary coolant flow circuit. In the illustrative example of FIGURE 1, feedwater is flowed upward through the steam generators **24,** either shell-side (if the primary coolant flows tube-side) or tube-side (if the primary coolant flows shell-side). Heat from the primary coolant in the steam generators **24** heats the feedwater converting it to steam. Feedwater inlets and steam outlets and optional feedwater and steam plenums (features not shown) are provided to flow feedwater into the steam generators **24** and to extract the steam from the steam generators **24.**

Primary coolant flow circulating through the hot and cold legs is via natural convection driven by heat output by the reactor core **30.** Optionally, reactor coolant pumps (RCPs) are provided to assist or drive the primary coolant flow. In illustrative FIGURE 1, RCPs **32** are disposed near the top of the upper vessel section **6.** The illustrative RCP **32** has a pump motor **34** located externally from the pressure vessel, and a driveshaft **36** passes through a vessel penetration in the upper vessel section **6** to operatively connect the motor **34** with an impeller **38** engaging the primary coolant inside the pressure vessel. The RCPs **32** may optionally include or be associated with further components (not shown), such as a pump housing surrounding the impeller **38** to define the pump flow, a pump plate separating the suction and discharge sides of the impeller **38,** and so forth. The illustrative RCPs **32** are secured to the upper vessel section **6** such that the upper vessel section **6,** the RCPs **32,** and (as mentioned before) the steam generators **24** can be lifted as a unit (again, after bolts or other fasteners securing the upper vessel section **6** to the mid-flange **10** are detached).

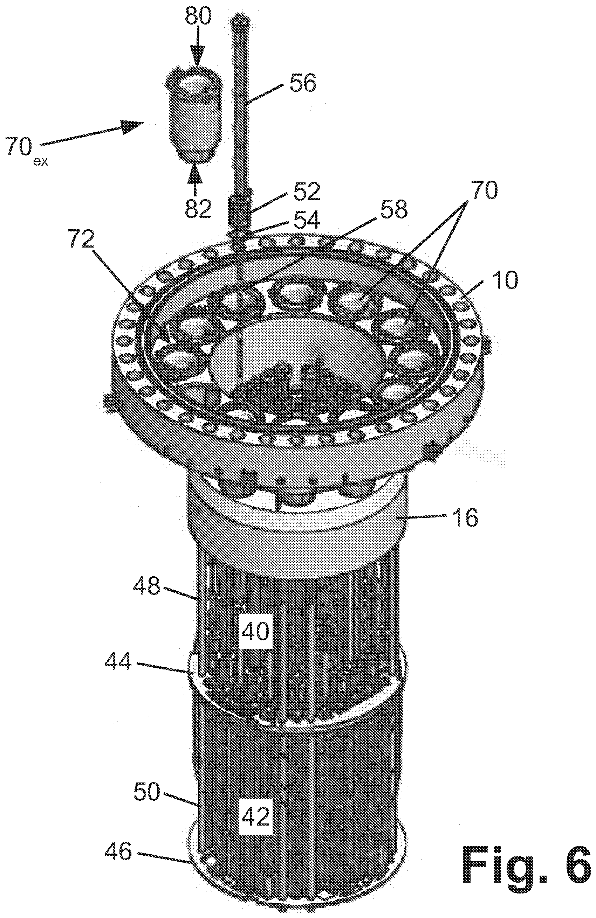

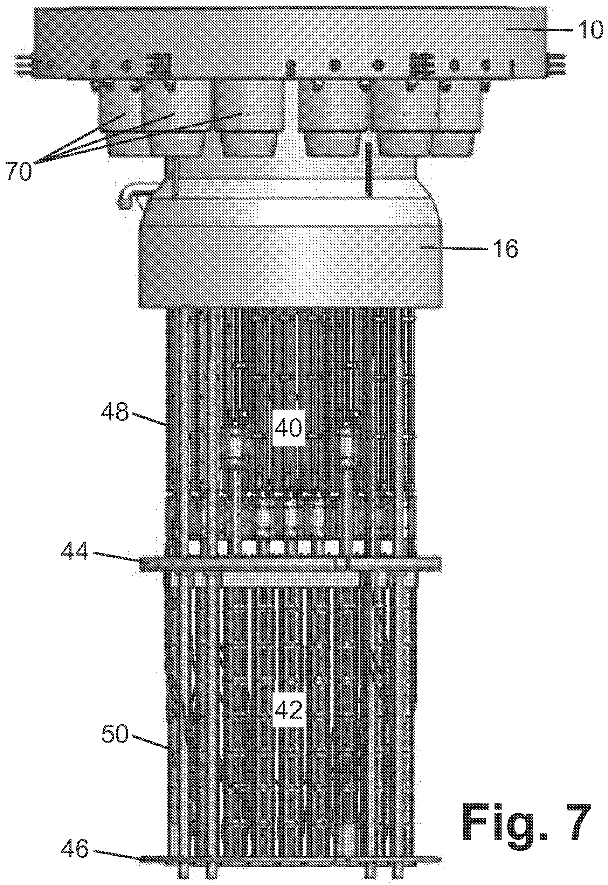

The illustrative RCPs **32** of FIGURE 1 are an example. More generally, RCPs can be mounted elsewhere. See, for example, FIGURES 6 and 7 (discussed elsewhere herein) which illustrate RCPs located proximate to the mid-flange **10.**

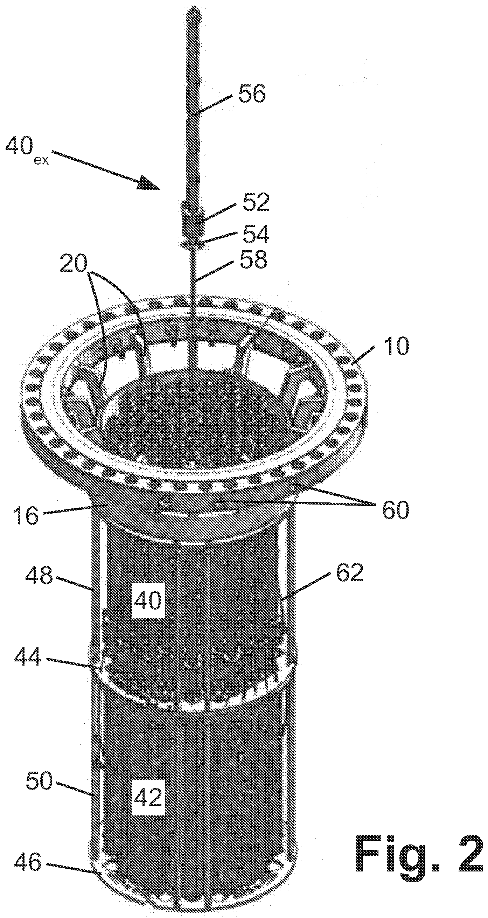

With continuing reference to FIGURE 1 and with further reference to FIGURES 2-5, an "upper internals" section of the nuclear reactor is further described. The upper internals include control rod drive mechanism (CRDM) units **40** controlling control rod insertion into the reactor core **30,** and guide frames **42** guiding control rods into the reactor core **30.** The guide frames **42** are located directly above the reactor core **30** in order to guide the control rods vertically into or out of the reactor core **30;** accordingly, the guide frames **42** are located inside the central riser. The illustrative integral PWR employs internal CRDM units **40** which are located inside the pressure vessel, and are also located inside the central riser to engage the control rod assemblies. The illustrative CRDM units **40** are disposed inside the cylindrical pressure vessel above the reactor core **30** and in the lower vessel section **8.** There is no vertical overlap between the upper vessel section **6** and the CRDM units **40,** and there is no vertical overlap between the steam generators **24** and the CRDM units **40.** With this configuration the CRDM units **40** are entirely inside the lower pressure vessel **8,** and the CRDM units **40** therefore do not impede lift off of the upper vessel section **6** with its secured steam generators **24.** In other words, the upper vessel section **6** and the steam generators **24** do not need to be lifted vertically to clear the CRDM units **40.**

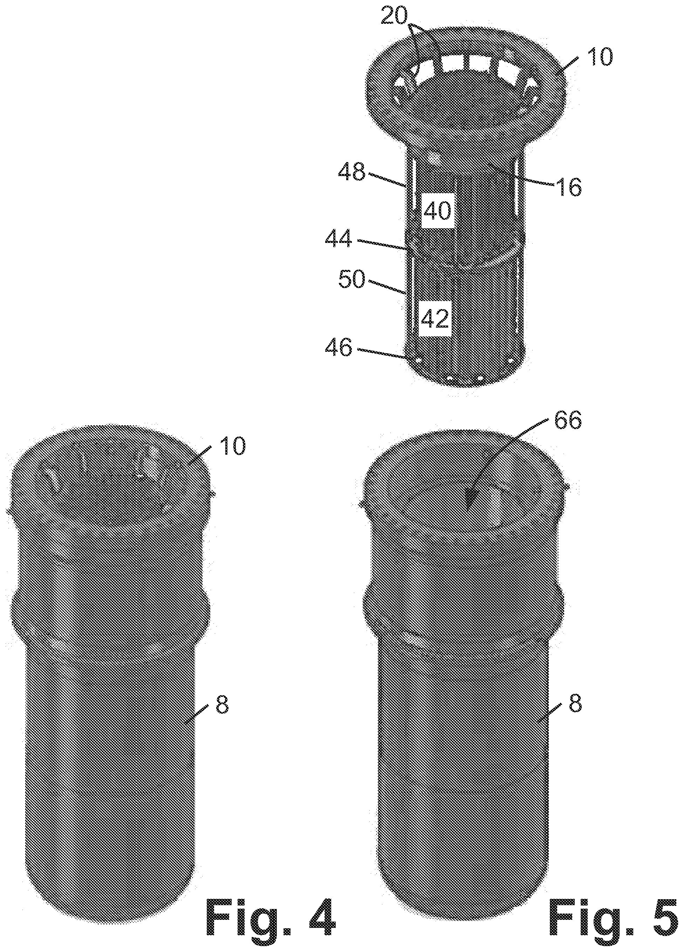

Moreover, with particular reference to FIGURES 2-5, the upper internals are designed to be suspended from the mid-flange **10.** In this way, the mid-flange **10** can be lifted out of the lower vessel section **8** (after removal of the upper vessel section **6)** with the riser transition section **16** connected and with the upper internals suspended from the mid-flange **10** (see particularly FIGURES 4 and 5). This assembly can be lifted as a unit out of the lower vessel section **8,** and moved laterally to an upper internals bay located inside containment for inspection or maintenance. The overhead suspension of the upper internals from the mid-flange **10** provides stable support that is not susceptible to tilting. Lifting out the upper internals in this way also provides unimpeded access from above to the reactor core **30** for refueling, fuel inspection or maintenance.

Toward this end, the riser transition section **16** is connected to the mid-flange **10** in a secure fashion to provide an anchor for the suspended upper internals. In the illustrative embodiment, the riser transition section **16** is welded to the mid-flange **10** by welding the upper ends of the gussets **20** to the inner diameter of the mid-flange **10** and welding the lower ends of the gussets **20** to the riser transition section **16.** A CRDM support plate **44** and a lower hanger plate **46** are suspended from the riser transition section **16** by tie rods **48, 50.** In the illustrated configuration, tie rods **48** have lower ends connected with the CRDM support plate **44** and upper ends connected with the riser transition section **16** so that the CRDM support plate **44** is suspended indirectly from the mid-flange **10** via the riser transition section **16** and the gussets **20.** Lower tie rods **50** then suspend the lower hanger plate **46** from the CRDM support plate **44.** In this approach the riser transition section **16** is a weight-bearing member that supports the CRDM support plate **44** and the lower hanger plate **46.**

Alternatively, the upper ends of the tie rods **48** can be welded or otherwise connected directly to the gussets **20,** with the tie rods passing through slots or holes in the riser transition section **16.** To prevent mixing of primary coolant from the hot and cold legs, the slots or holes in the riser transition section **16** are suitably closed, for example by weldments that also secure the riser transition section **16** to the gussets **20.** In this approach the riser transition section **16** is not a weight-bearing member.

In another variation, the tie rods **48** and lower tie rods **50** can be constructed as continuous single-piece tie rods having their lower ends connected with the lower hanger plate **46** and their upper ends connected with the riser transition section **16** or directly with the gussets **20.** In this variation, the CRDM support plate **44** connects with the continuous single-piece tie rods at a designated location along the length of the tie rods, i.e. at a designated location between the upper and lower ends of the tie rods.

In yet another contemplated variation, the tie rods **48** (or alternatively the continuous single-piece tie rods as previously described) have their upper ends connected directly with the mid-flange **10.** In this case the tie rods are at a slight angle respective to the vertical in order to accommodate the larger inner diameter of the mid-flange **10** compared with the inner diameter of the central riser. In this embodiment the riser transition section would not be a weight-bearing member, but would have slots or holes for the tie rods to pass through.

With brief reference to FIGURE 2, the CRDM units **40** each include a CRDM motor **52,** a standoff **54,** and a latch mechanism **56.** In FIGURE 2, a single CRDM unit **40ₑₓ** is shown in an "exploded" view, that is, removed from the overall assembly, in order to show the CRDM motor **52,** standoff **54,** and latch mechanism **56.** The CRDM standoff **56** mounts to the CRDM support plate **44** to support the CRDM unit with the CRDM motor **52** at a designated height. The CRDM motor **52** operates directly or indirectly to raise or lower a connecting rod **58** that is attached to a set of control rods via a spider (control rods and spider not shown). The assembly of the connecting rod, spider, and set of control rods is sometimes referred to as a control rod assembly (CRA). In normal operation, the CRDM motor **52** raises or lowers the CRA to insert or withdraw the constituent control rods into or from the reactor core **30.** In the event of a SCRAM, the latch mechanism **56** releases the connecting rod **58** to allow the CRA to fall under force of gravity toward the reactor core **30** so as to rapidly insert the control rods fully into the reactor core **30.** The CRDM unit **40ₑₓ** of FIGURE 2 conforms with embodiments disclosed in Stambaugh et al., U.S. Pub. No. 2010/0316177 A1; Desantis, U.S. Pub. No. 2011/0222640 A1; and Stambaugh et al., WO 2010/144563 A1. In these embodiments, the CRDM motor **52** operates on a lead screw and the upper end of the control rod is electrically or hydraulically latched with the lead screw by the latch mechanism **56.** In a SCRAM the latch mechanism **56** releases to SCRAM the CRA including the connecting rod **58,** but not including the lead screw. The CRDM unit **40ₑₓ** is optionally replaced by a more conventional CRDM unit in which the latch is omitted and SCRAM is initiated by opening a separable roller nut of the CRDM motor that connects with the lead screw, such that the CRA and the lead screw SCRAM together, or by a CRDM unit employing a ratchet mechanism to raise/lower the CRA.

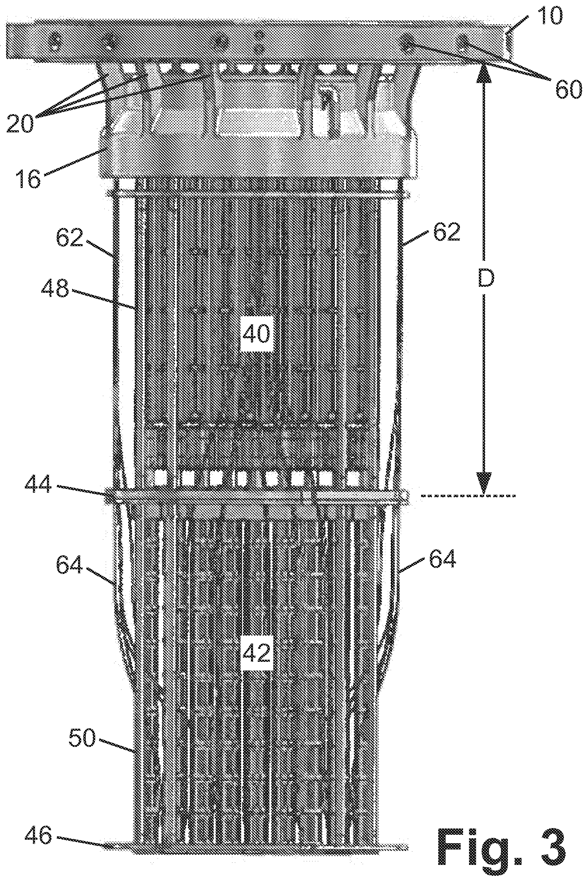

In any of these cases, it will be appreciated that when the control rods are fully withdrawn the connecting rod will extend well above the CRDM motor, and the CRDM unit should have sufficient height above the CRDM motor to accommodate this. In the disclosed approaches, the CRDM support plate **44** is suspended below the mid-flange **10** by a distance **D** (labeled only in FIGURE 3) that is sufficient that the tops of the CRDM units **40** including the latch mechanism **56** (or, in other CRDM unit arrangements, including the upper housing or support for the connecting rod/lead screw) are located below the mid-flange **10,** that is, so that the CRDM units **40** are disposed entirely in the lower vessel section **8.** The CRDM units **40** have no vertical overlap with the upper vessel section **6** and have no vertical overlap with the steam generators **24.**

The gussets **20** support the weight of the upper internals (except in the contemplated variation in which the tie rods connect directly with the mid-flange). The gussets **20** are also substantially rigid components that locate the riser transition section **16** inside the pressure vessel. During temperature ramp-up as the reactor is started, and subsequent temperature ramp-down prior to a vessel opening, the various components undergo substantial temperature transients and, if different materials are used, some differential thermal expansion may be experienced. The illustrative gussets **20** are advantageously shaped to help accommodate differential thermal expansion by being angled downward such that the riser transition section **16** is disposed below the mid-flange **10.** This allows the accommodation of any differential thermal expansion to be distributed in both vertical and lateral directions.

As already discussed, the disclosed configurations advantageously enable the upper internals to be removed as a unit suspended below the mid-flange **10.** To further facilitate this modularity and ease of removal of the upper internals, in some embodiments power delivery cabling is also integrated into this assembly. Toward this end, the power delivery cabling may include electrical feedthroughs **60** passing through the mid-flange **10,** and mineral insulated (MI) cables **62** extending from the electrical feedthroughs **60** to the CRDM units **40** to conduct electrical power to the CRDM units **40.** Additionally or alternatively, some or all of the feedthroughs **60** may be hydraulic feedthroughs passing through the mid-flange **10,** and the cables **62** may correspondingly be hydraulic cables extending from the hydraulic feedthroughs **60** to the CRDM units **40** to conduct hydraulic power to the CRDM units **40.** (Note, the power delivery cabling components **60, 62** are labeled only in FIGURES 2 and 3). Optionally, additional cabling **64** (labeled only in FIGURE 3) may extend to the reactor core **30** to connect with in-core sensors (not shown). The MI or hydraulic cables **62** are relatively rigid and are suitably secured to structural elements of the mid-flange/upper internals assembly in order that the cables **62** can be lifted out with the assembly without disconnecting the cables from either the CRDM units **40** or the mid-flange feedthroughs **60.** For example, the cables may be secured to the riser transition section **16** and/or to the tie rods **48** and/or to the CRDM support plate **44.** In some embodiments, portions of the MI and/or hydraulic cables **62** that run along the CRDM support plate **44** are embedded in or secured to the CRDM support plate **44** such that the CRDM support plate **44** is a power distribution plate for laterally distributing electrical and/or hydraulic power to the CRDM units **40** supported by the plate **44.** It is contemplated to similarly use the lower hanger plate **46** to laterally distribute MI cables connecting with in-core sensors of the array of fuel assemblies making up the reactor core **30.**

With reference to FIGURES 4 and 5, removal of the upper internals is illustrated. FIGURE 4 shows the lower vessel section **8** and the mid-flange **10** which remain after the upper vessel section **6** has been removed. FIGURE 5 shows the mid-flange **10** raised vertically to lift the suspended upper internals (i.e., the CRDM units **48** and guide frames **50** supported respectively by the CRDM support plate **44** and lower hanger plate **46)** out of the lower vessel section **8.** The lifted assembly can then be moved laterally (not illustrated) to provide overhead access to the reactor core **30** via a large opening **66** exposed at the top of the lower vessel section **8.**

With reference to FIGURES 6 and 7, an alternative embodiment is shown, in which the RCP's **32** mounted on the upper vessel section **6** proximate to the internal pressurizer **26** are replaced by RCPs **70** that are disposed entirely inside the cylindrical pressure vessel. The RCPs **70** are mounted on an annular pump plate **72** that has an outer circular perimeter connecting with the mid-flange **10** and an inner circular perimeter connected with the riser transition section **16.** In some embodiments the outer and inner circular perimeters of the annular pump plate **72** are welded to the mid-flange **10** and the riser transition section **16,** respectively. In such embodiments, the annular pump plate **72** can replace the structural function of the gussets **20,** that is, the annular pump plate **72** supports the upper internals. (Alternatively, the gussets **20** can be retained, in which case the annular pump plate supports the RCPs **70** but not the upper internals). The annular pump plate **72** supports the RCPs **70** and also provides separation between the suction and discharge sides of the RCPs **70.** In FIGURE 6, a single RCP **70ₑₓ** is shown in an "exploded" view, that is, removed from the overall assembly, in order to show it in more detail. The RCP **70ₑₓ** has a suction side **80** and a discharge side **82.** The RCP **70ₑₓ** can be substantially any type of canned pump.

The preferred embodiments have been illustrated and described. Obviously, modifications and alterations will occur to others upon reading and understanding the preceding detailed description. It is intended that the invention be construed as including all such modifications and alterations insofar as they come within the scope of the appended claims .

## Claims

1. An apparatus comprising:
a cylindrical pressure vessel including an upper vessel section (6), a mid-flange (10) and a lower vessel section (8), wherein the upper vessel section and the lower vessel section are joined by the mid-flange;
a cylindrical central riser disposed concentrically inside the cylindrical pressure vessel and including an upper riser section (12) disposed in the upper vessel section and a lower riser section (14) disposed in the lower vessel section;
a reactor core (30) comprising fissile material disposed inside the cylindrical pressure vessel in the lower vessel section;
control rod drive mechanism, CRDM, units (40) for controlling control rod insertion into the reactor core, the CRDM units being disposed inside the cylindrical pressure vessel above the reactor core and in the lower vessel section with no vertical overlap between the upper vessel section and the CRDM units;
steam generators (24) disposed inside the cylindrical pressure vessel and entirely in the upper vessel section; and **characterized by** a CRDM support plate (44) supporting the CRDM units;
wherein the CRDM support plate is suspended directly or indirectly from the mid-flange by tie rods (48).

2. The apparatus of claim 1, wherein the steam generators are secured to the upper vessel section such that the upper vessel section and the steam generators can be lifted as a unit.

3. The apparatus of claim 1, wherein the cylindrical central riser further comprises:
a riser transition section (16) disposed between the upper riser section and the lower riser section, the riser transition section being connected to the mid-flange.

4. The apparatus of claim 3, further comprising:
gussets (20) connecting the riser transition section to the mid-flange, the gussets having first ends welded to the mid-flange and second ends welded to the riser transition section.

5. The apparatus of claim 4, wherein the gussets connecting the riser transition section to the mid-flange are angled downward such that the riser transition section is disposed below the mid-flange.

6. The apparatus of claim 1, wherein upper ends of the tie rods connect with the riser transition section to suspend the CRDM support plate from the mid-flange via the riser transition section and the gussets.

7. The apparatus of claim 1, further comprising:
guide frames (50) disposed between the CRDM units and the reactor core and guiding control rods into the reactor core;
a lower hanger plate (46) supporting the guide frames; and
one selected from the group comprising: lower tie rods (50) suspending the lower hanger plate from the CRDM support plate; and
wherein the tie rods further connect with the lower hanger plate such that the lower hanger plate is also suspended from the mid-flange by the tie rods.

8. The apparatus of claim 1, further comprising:
power delivery cabling including at least one of:
electrical feedthroughs (60) passing through the mid-flange and mineral insulated, MI, cables (62) extending from the electrical feedthroughs to the CRDM units to conduct electrical power to the CRDM units; and
hydraulic feedthroughs passing through the mid-flange and hydraulic cables extending from the hydraulic feedthroughs to the CRDM units to conduct hydraulic power to the CRDM units.

9. The apparatus of claim 8, wherein at least one of MI cables and hydraulic cables of the power delivery cabling are embedded in or secured to the CRDM support plate such that the CRDM support plate is a power distribution plate.

10. The apparatus of claim 3, further comprising:
an annular pump plate (72) having an outer circular perimeter connecting with the mid-flange and an inner circular perimeter connected with the riser transition section; and
reactor coolant pumps disposed entirely inside the cylindrical pressure vessel and mounted on the annular pump plate.

11. The apparatus of claim 1, further comprising:
reactor coolant pumps mounted on the upper pressure vessel.

12. The apparatus of claim 3, further comprising:
gussets extending generally downward from the mid-flange to the riser transition section, the gussets having opposing ends welded to the mid-flange and to the riser transition section, respectively.

13. The apparatus of claim 1, wherein the cylindrical central riser further includes a riser transition section disposed between the upper riser section and the lower riser section, the riser transition section is welded to the mid-flange by gussets, and upper ends of the tie rods connect to the riser transition section.

14. The apparatus of claim 13, further comprising:
guide frames disposed between the CRDM units and the reactor core; and
a lower hanger plate supporting the guide frames;
wherein the lower hanger plate is suspended directly or indirectly from the mid-flange by tie rods.

15. The apparatus of claim 14, further comprising:
lower tie rods suspending the lower hanger plate directly from the CRDM support plate.

16. The apparatus of claim 1, further comprising:
power delivery cabling including at least one of:
electrical feedthroughs passing through the mid-flange and mineral insulated, MI, cables extending from the electrical feedthroughs to the CRDM units to conduct electrical power to the CRDM units; and
hydraulic feedthroughs passing through the mid-flange and hydraulic cables extending from the hydraulic feedthroughs to the CRDM units to conduct hydraulic power to the CRDM units;
wherein the mid-flange, CRDM support plate, CRDM units, and power delivery cabling can be lifted as a unit suspended from the mid-flange without disconnecting the cables from the feedthroughs and without disconnecting the cables from the CRDM units.

17. The apparatus of claim 16, wherein the CRDM support plate defines a power distribution plate for the power delivery cabling.

18. A method of opening the apparatus according to claim 1, the method comprising:
disconnecting the upper vessel section from the mid-flange; and
removing the upper vessel section from the mid-flange.

19. The method of claim 18, further comprising:
disconnecting the mid-flange from the lower vessel section; and
removing the mid-flange and the CRDM units from the lower vessel section with the CRDM units hanging suspended from the mid-flange.

## Patentansprüche

1. Vorrichtung, die Folgendes umfasst:
einen zylindrischen Druckbehälter, der einen oberen Behälterabschnitt (6), einen Mittelflansch (10) und einen unteren Behälterabschnitt (8) enthält, wobei der obere Behälterabschnitt und der untere Behälterabschnitt durch den Mittelflansch verbunden sind;
eine zylindrische Mittelsteigleitung, die in dem zylindrischen Druckbehälter konzentrisch angeordnet ist und einen oberen Steigleitungsabschnitt (12), der in dem oberen Behälterabschnitt angeordnet ist, und einen unteren Steigleitungsabschnitt (14), der in dem unteren Behälterabschnitt angeordnet ist, enthält;
einen Reaktorkern (30), der spaltbares Material umfasst, der in dem zylindrischen Druckbehälter in dem unteren Behälterabschnitt angeordnet ist;
Steuerstabantriebsmechanismus-Einheiten (CRDM-Einheiten, 40) zum Steuern der Steuerstabeinführung in den Reaktorkern, wobei die CRDM-Einheiten in dem zylindrischen Druckbehälter über dem Reaktorkern und in dem unteren Behälterabschnitt ohne vertikale Überlappung zwischen dem oberen Behälterabschnitt und den CRDM-Einheiten angeordnet sind;
Dampferzeuger (24), die in dem zylindrischen Druckbehälter und vollständig in dem oberen Behälterabschnitt angeordnet sind; und
**gekennzeichnet durch**
eine CRDM-Tragplatte (44), die die CRDM-Einheiten trägt;
wobei die CRDM-Tragplatte direkt oder indirekt durch Zugstangen (48) an dem Mittelflansch aufgehängt ist.

2. Vorrichtung nach Anspruch 1, wobei die Dampferzeuger derart an dem oberen Behälterabschnitt befestigt sind, dass der obere Behälterabschnitt und die Dampferzeuger als eine Einheit angehoben werden können.

3. Vorrichtung nach Anspruch 1, wobei die zylindrische Mittelsteigleitung ferner Folgendes umfasst:
einen Steigleitungsübergangsabschnitt (16), der zwischen dem oberen Steigleitungsabschnitt und dem unteren Steigleitungsabschnitt angeordnet ist, wobei der Steigleitungsübergangsabschnitt mit dem Mittelflansch verbunden ist.

4. Vorrichtung nach Anspruch 3, die ferner Folgendes umfasst:
Winkelstücke (20), die den Steigleitungsübergangsabschnitt mit dem Mittelflansch verbinden, wobei die Winkelstücke erste Enden, die an den Mittelflansch geschweißt sind, und zweite Enden, die an den Steigleitungsübergangsabschnitt geschweißt sind, aufweisen.

5. Vorrichtung nach Anspruch 4, wobei die Winkelstücke, die den Steigleitungsübergangsabschnitt mit dem Mittelflansch verbinden, nach unten gewinkelt sind, so dass der Steigleitungsübergangsabschnitt unter dem Mittelflansch angeordnet ist.

6. Vorrichtung nach Anspruch 1, wobei obere Enden der Zugstangen mit dem Steigleitungsübergangsabschnitt verbunden sind, um die CRDM-Tragplatte über den Steigleitungsübergangsabschnitt und die Winkelstücke an dem Mittelflansch aufzuhängen.

7. Vorrichtung nach Anspruch 1, die ferner Folgendes umfasst:
Führungsrahmen (50), die zwischen den CRDM-Einheiten und dem Reaktorkern angeordnet sind und Steuerstäbe in den Reaktorkern führen;
eine untere Aufhängungsplatte (46), die die Führungsrahmen trägt; und
ein Element, das aus der Gruppe, die Folgendes umfasst, ausgewählt wird: untere Zugstangen (50), die die untere Aufhängungsplatte an der CRDM-Tragplatte aufhängen; und
wobei die Zugstangen ferner mit der unteren Aufhängungsplatte verbunden sind, so dass die untere Aufhängungsplatte auch durch die Zugstangen an dem Mittelflansch aufgehängt sind.

8. Vorrichtung nach Anspruch 1, die ferner Folgendes umfasst:
eine Leistungsversorgungsverkabelung, die Folgendes enthält:
elektrische Durchführungen (60), die durch den Mittelflansch verlaufen, und mineralisch isolierte Kabel (MI-Kabel, 62), die sich von den elektrischen Durchführungen zu den CRDM-Einheiten erstrecken, um elektrische Leistung zu den CRDM-Einheiten zu leiten; und/oder
hydraulische Durchführungen, die durch den Mittelflansch verlaufen, und hydraulische Kabel, die sich von den hydraulischen Durchführungen zu den CRDM-Einheiten erstrecken, um hydraulische Leistung zu den CRDM-Einheiten zu leiten.

9. Vorrichtung nach Anspruch 8, wobei die MI-Kabel und/oder die hydraulischen Kabel der Leistungsversorgungsverkabelung in der CRDM-Tragplatte eingebettet oder daran befestigt sind, so dass die CRDM-Tragplatte einer Leistungsverteilungsplatte entspricht.

10. Vorrichtung nach Anspruch 3, die ferner Folgendes umfasst:
eine ringförmige Pumpenplatte (72), die einen äußeren ringförmigen Umfang, der mit dem Mittelflansch verbunden ist, und einen inneren ringförmigen Durchmesser, der mit dem Steigleitungsübergangsabschnitt verbunden ist, aufweist; und
Reaktorkühlmittelpumpen, die vollständig in dem zylindrischen Druckbehälter angeordnet sind und auf der ringförmigen Pumpenplatte montiert sind.

11. Vorrichtung nach Anspruch 1, die ferner Folgendes umfasst:
Reaktorkühlmittelpumpen, die an dem oberen Druckbehälter montiert sind.

12. Vorrichtung nach Anspruch 3, die ferner Folgendes umfasst:
Winkelstücke, die sich im Allgemeinen von dem Mittelflansch zu dem Steigleitungsübergangsabschnitt nach unten erstrecken, wobei die Winkelstücke gegenüberliegende Enden aufweisen, die an den Mittelflansch bzw. den Steigleitungsübergangsabschnitt geschweißt sind.

13. Vorrichtung nach Anspruch 1, wobei die zylindrische Mittelsteigleitung einen Steigleitungsübergangsabschnitt enthält, der zwischen dem oberen Steigleitungsabschnitt und dem unteren Steigleitungsabschnitt angeordnet ist, wobei der Steigleitungsübergangsabschnitt durch Winkelstücke an den Mittelflansch geschweißt ist und obere Enden der Zugstangen mit dem Steigleitungsübergangsabschnitt verbunden sind.

14. Vorrichtung nach Anspruch 13, die ferner Folgendes umfasst:
Führungsrahmen, die zwischen den CRDM-Einheiten und dem Reaktorkern angeordnet sind; und
eine untere Aufhängungsplatte, die die Führungsrahmen trägt;
wobei die untere Aufhängungsplatte direkt oder indirekt durch Zugstangen an dem Mittelflansch aufgehängt ist.

15. Vorrichtung nach Anspruch 14, die ferner Folgendes umfasst:
untere Zugstangen, die die untere Aufhängungsplatte direkt an der CRDM-Tragplatte aufhängen.

16. Vorrichtung nach Anspruch 1, die ferner Folgendes umfasst:
eine Leistungsversorgungsverkabelung, die Folgendes enthält:
elektrische Durchführungen, die durch den Mittelflansch verlaufen, und mineralisch isolierte Kabel (MI-Kabel), die sich von den elektrischen Durchführungen zu den CRDM-Einheiten erstrecken, um elektrische Leistung zu den CRDM-Einheiten zu leiten; und/oder
hydraulische Durchführungen, die durch den Mittelflansch verlaufen und hydraulische Kabel, die sich von den hydraulischen Durchführungen zu den CRDM-Einheiten erstrecken, um hydraulische Leistung zu den CRDM-Einheiten zu leiten;
wobei der Mittelflansch, die CRDM-Tragplatte, CRDM-Einheiten und die Leistungsversorgungsverkabelung als eine Einheit angehoben werden können, die an dem Mittelflansch aufgehängt ist, ohne die Kabel von den Durchführungen zu trennen und ohne die Kabel von den CRDM-Einheiten zu trennen.

17. Vorrichtung nach Anspruch 16, wobei die CRDM-Tragplatte eine Leistungsverteilungsplatte für die Leistungsversorgungsverkabelung definiert.

18. Verfahren zum Öffnen der Vorrichtung nach Anspruch 1, wobei das Verfahren Folgendes umfasst:
Trennen des oberen Behälterabschnitts von dem Mittelflansch; und
Entfernen des oberen Behälterabschnitts von dem Mittelflansch.

19. Verfahren nach Anspruch 18, das ferner Folgendes umfasst:
Trennen des Mittelflansches von dem unteren Behälterabschnitt; und
Entfernen des Mittelflansches und der CRDM-Einheiten von dem unteren Behälterabschnitt, wobei die CRDM-Einheiten an dem Mittelflasch aufgehängt hängen.

## Revendications

1. Appareil comprenant :
une cuve de pression cylindrique comportant une section de cuve supérieure (6), une bride centrale (10) et une section de cuve inférieure (8), dans lequel la section de cuve supérieure et la section de cuve inférieure sont jointes par la bride centrale ;
une colonne montante centrale cylindrique disposée concentriquement à l'intérieur de la cuve de pression cylindrique et comportant une section de colonne montante supérieure (12) disposée dans la section de cuve supérieure et une section de colonne montante inférieure (14) disposée dans la section de cuve inférieure ;
un coeur de réacteur (30) comprenant un matériau fissile disposé à l'intérieur de la cuve de pression cylindrique dans la section de cuve inférieure ;
des unités de mécanisme d'entraînement de barres de commande, CRDM, (40), destinées à commander l'insertion de barres de commande à l'intérieur du coeur de réacteur, les unités CRDM étant disposées à l'intérieur de la cuve de pression cylindrique au-dessus du coeur de réacteur et dans la section de cuve inférieure sans chevauchement vertical entre la section de cuve supérieure et les unités CDRM ;
des générateurs de vapeur (24) disposés à l'intérieur de la cuve de pression cylindrique et entièrement dans la section de cuve supérieure ; et
**caractérisé par**
une plaque de support CRDM (44) qui supporte les unités CRDM ;
dans lequel la plaque de support CRDM est suspendue directement ou indirectement à la bride centrale par des tirants (48).

2. Appareil selon la revendication 1, dans lequel les générateurs de vapeur sont fixés à la section de cuve supérieure de telle sorte que la section de cuve supérieure et les générateurs de vapeur puissent être levés d'un seul tenant.

3. Appareil selon la revendication 1, dans lequel la colonne montante centrale cylindrique comprend en outre :
une section de transition de colonne montante (16) disposée entre la section de colonne montante supérieure et la section de colonne montante inférieure, la section de transition de colonne montante étant connectée à la bride centrale.

4. Appareil selon la revendication 3, comprenant en outre :
des goussets (20) qui connectent la section de transition de colonne montante à la bride centrale, les goussets ayant des premières extrémités soudées à la bride centrale et des secondes extrémités soudées à la section de transition de colonne montante.

5. Appareil selon la revendication 4, dans lequel les goussets connectant la section de transition de colonne montante à la bride centrale sont inclinés vers le bas de telle sorte que la section de transition de colonne montante soit disposée en dessous de la bride centrale.

6. Appareil selon la revendication 1, dans lequel des extrémités supérieures des tirants sont connectées à la section de transition de colonne montante pour suspendre la plaque de support CRDM à la bride centrale par l'intermédiaire de la section de transition de colonne montante et des goussets.

7. Appareil selon la revendication 1, comprenant en outre :
des cadres de guidage (50) disposés entre les unités CRDM et le coeur de réacteur et guidant les barres de commande à l'intérieur du coeur de réacteur ;
une plaque de suspension inférieure (46) qui supporte les cadres de guidage ; et
un tirant sélectionné dans le groupe comprenant :
des tirants inférieurs (50) qui suspendent la plaque de suspension inférieure à la plaque de support CRDM ; et
dans lequel les tirants sont connectés en outre à la plaque de suspension inférieure de telle sorte que la plaque de suspension inférieure soit également suspendue à la bride centrale par les tirants.

8. Appareil selon la revendication 1, comprenant en outre :
un câblage de distribution d'énergie comportant au moins l'un :
de traversées électriques (60) passant à travers la bride centrale et de câbles à isolation minérale, MI (62) s'étendant depuis les traversées électriques jusqu'aux unités CRDM pour conduire une énergie électrique jusqu'aux unités CRDM ; et
de traversées hydrauliques passant à travers la bride centrale et de câbles hydrauliques s'étendant depuis les traversées hydrauliques jusqu'aux unités CRDM pour conduire une énergie hydraulique jusqu'aux unités CRDM.

9. Appareil selon la revendication 8, dans lequel au moins l'un des câbles MI et des câbles hydrauliques du câblage de distribution d'énergie est noyé dans la plaque de support CRDM ou fixé à celle-ci de telle sorte que la plaque de support CRDM soit une plaque de distribution d'énergie.

10. Appareil selon la revendication 3, comprenant en outre :
une plaque à pompes annulaire (72) ayant un périmètre circulaire externe se connectant à la bride centrale et un périmètre circulaire interne se connectant à la section de transition de colonne montante ; et
des pompes à réfrigérant de réacteur disposées entièrement à l'intérieur de la cuve de pression cylindrique et montées sur la plaque à pompes annulaire.

11. Procédé selon la revendication 1, comprenant en outre :
des pompes à réfrigérant de réacteur montées sur la cuve de pression supérieure.

12. Appareil selon la revendication 3, comprenant en outre :
des goussets s'étendant généralement vers le bas depuis la bride centrale jusqu'à la section de transition de colonne montante, les goussets ayant des extrémités opposées soudées respectivement à la bride centrale et à la section de transition de colonne montante.

13. Appareil selon la revendication 1, dans lequel la colonne montante centrale cylindrique comporte en outre une section de transition de colonne montante disposée entre la section de colonne montante supérieure et la section de colonne montante inférieure, la section de transition de colonne montante est soudée à la bride centrale par des goussets, et les extrémités supérieures des tirants se connectent à la section de transition de colonne montante.

14. Appareil selon la revendication 13, comprenant en outre :
des cadres de guidage disposés entre les unités CRDM et le coeur de réacteur ; et
une plaque de suspension inférieure supportant les cadres de guidage ;
dans lequel la plaque de suspension inférieure est suspendue directement ou indirectement à la bride centrale par des tirants.

15. Appareil selon la revendication 14, comprenant en outre :
des tirants inférieurs qui suspendent la plaque de suspension inférieure directement à la plaque de support CRDM.

16. Appareil selon la revendication 1, comprenant en outre :
un câblage de distribution d'énergie comportant au moins l'un :
de traversées électriques passant à travers la bride centrale et de câbles à isolation minérale, MI, s'étendant depuis les traversées électriques jusqu'aux unités CRDM pour conduire une énergie électrique jusqu'aux unités CRDM ; et
de traversées hydrauliques passant à travers la bride centrale et de câbles hydrauliques s'étendant depuis les traversées hydrauliques jusqu'aux unités CRDM pour conduire une énergie hydraulique jusqu'aux unités CRDM ;
dans lequel la bride centrale, la plaque de support CRDM, les unités CRDM et le câblage de distribution d'énergie peuvent être levés d'un seul tenant suspendus à la bride centrale sans déconnecter les câbles des traversées et sans déconnecter les câbles des unités CRDM.

17. Appareil selon la revendication 16, dans lequel la plaque de support CRDM définit une plaque de distribution d'énergie pour le câblage de distribution d'énergie.

18. Procédé d'ouverture de l'appareil selon la revendication 1, le procédé comprenant :
la déconnexion de la section de cuve supérieure de la bride centrale ; et
le retrait de la section de cuve supérieure de la bride centrale.

19. Procédé selon la revendication 18, comprenant en outre :
la déconnexion de la bride centrale de la section de cuve inférieure ; et
le retrait de la bride centrale et des unités CRDM de la section de bride inférieure avec les unités CRDM suspendues à la bride centrale.
